# EUROPEAN PATENT SPECIFICATION

(11) **EP 1 473 485 B1**
(45) Date of publication and mention of the grant of the patent: **14.06.2006**
(21) Application number: 04252011.4
(22) Date of filing: 02.04.2004
(51) Int. Cl.: F16F 15/20

(54) **Reducing counter-phase vibrations**
Reduzierung von Rupfschwingungen
Réduction des vibrations de grippage

(30) Priority: 04.04.2003 GB 0307819
(43) Date of publication of application: 03.11.2004
(73) Proprietor: Bombardier Transportation GmbH, 13627 Berlin (DE)
(72) Inventor: Haese, Peter Dr. Ing., 8610 Uster (CH)
(74) Representative: Broydé, Marc

(56) References cited:
- EP-A- 0 521 162
- EP-A- 0 968 872
- GB-A- 326 857
- US-A- 2 265 933
- US-A- 6 020 714
- US-A1- 2003 043 605
- BUSCHER M ET AL: "RADSCHLUPFREGELUNG FUER DREHSTROMLOKOMOTIVEN" ELEKTRISCHE BAHNEN, OLDENBOURG VERLAG. MUNCHEN, DE, vol. 91, no. 5, 1 May 1993 (1993-05-01), pages 163-178, XP000383543 ISSN: 0013-5437

## Description

The present invention relates to a method of reducing counter-phase vibrations with the features of claim 1, which method could be used e.g. in a vehicle drive system and more particularly to the reduction of such vibrations in rail vehicles wherein multiple drive units are fed in parallel from an energy supply. It also relates to a rail vehicle drive with the features of claim 17.

Document EP-A-0 968 872 shows the features of the preamble of claim 17. Document US-A-6 020 714 is a prior art example of a method of reducing vibrations.

Modern rail vehicles powered by electrical motors frequently incorporate a number of drive motors within a single unit, supplied by a single converter/inverter. Each drive motor will typically comprise an asynchronous or induction motor and will be coupled directly or through a transmission to a wheel, axle or wheel set. Such arrangements have becoming popular forms of propulsion in recent years and may be referred to as drive groups. Some drive groups comprise a pair of motors fed by a single supply, while others use three motors or even as many as eight motors in a single group.

It is also known to provide traction control for controlling the amount of slip between wheels and rail during driving and braking of such rail vehicles. Various arrangements are known wherein on detection of uncontrolled slip, the traction applied to the wheels is reduced. This may be achieved by control of the converter unit to reduce the stator frequency of the motors. Typically, this may be done in the form of a search algorithm wherein the stator frequency will be incrementally increased and reduced while monitoring the resultant torque reaction to determine the point of maximum traction. Documents which disclose adhesion control units include EP 0888922 A1, DE 10017613 A1 and DE 19927223 A1.

It has now been observed that such drive layouts may, under certain conditions, display low-frequency vibrations involving substantial parts of the electro-mechanical drive. Typically, in the case of two drive units fed by a common power converter, these vibrations are almost exactly in counter-phase. This means that the rotor and/or other drive elements and the wheel-set of one drive unit vibrate as one, with approx. 180° phase displacement vis-à-vis the other drive unit. In the case of three drive units fed by a common inverter, the phase displacement amounts to 120° each. According to the present state of the art, known converter control systems may take into account only the mean values of the motor phase currents and angular frequencies supplied. In such cases however, this particular type of counter-phase vibration remains hidden to the control system. None of the above-mentioned documents recognises the existence of such counter-phase vibrations, since they are directed to the control of a single motor rather than a motor group.

According to the present invention, it has become apparent that at least some of the following criteria must normally apply in order for this type of vibration to develop:
- A stator frequency range, rotary frequency or, alternatively, travelling speed defined within relatively narrow limits;
- Negligible damping of the drive units, for instance through an operating point near to the frictional peak, which is accompanied by rather high slip between wheel and driving surface;
- Generally reduced tractive power or, alternatively, reduced torque of asynchronous motors when compared to the nominal values; and
- Negligible "inner" damping of the asynchronous motor due to low rotor resistance, which can, in particular, be caused by low rotor temperature.

This list of factors is not intended to be limiting. Other factors may also influence the onset of counter-phase vibration within the drive system. Alternatively, such vibrations may occur even when one of the above factors is outside of expected danger zones. Not all of these factors are equally determinant in causing or contributing to the onset of counter-phase vibration.

Unfavourable consequences of these counter-phase vibrations include:
- Low utilisation of the existing frictional connection between wheel and rail;
- High stress affecting the drive units and bogie
- Increased wear in the transmission caused by possible tooth flank switching;
- Higher wear and tear on wheels; and
- Reduced riding comfort caused, in particular, by positive feedback of bogie vibrations.

It is therefore desirable to avoid this type of vibration, or to narrow the range of instability. A possible way of achieving this could be to identify the presence of such vibrations e.g. on the basis of the difference in angular velocity of the individual rotors or the individual wheels. Motor torque could then be reduced to limit the slip between wheel and rail, bringing the operating point of the drive away from the frictional peak where such instabilities occur. On the one hand, this leads to oscillatory cycles starting up time and again and, on the other hand, to considerably reduced traction. This applies particularly to extended accelerations or during constant speed operation within the relevant speed range.

According to features of an embodiment of the present invention it has been found that counter-phase vibration can be reduced or eliminated for a plurality of motors supplied in parallel by a common power supply, by monitoring the system for the presence of factors indicative of the onset of counter-phase vibrations between the plurality of motors and on detection of the presence of such factors, reducing the motor flux of the plurality of motors. In general, induction motors in the field of rail traction are operated with nominal values of motor flux corresponding substantially to the maximum flux which may be achieved before field weakening effects become significant. By operating close to maximum flux for a given value of torque, the motor current is minimised. Such an operating point is generally considered advantageous since, as a consequence, energy losses and the resulting motor temperature are reduced. Reduction of flux thus runs generally counter to accepted thinking in the field of rail traction.

According to features of an embodiment of the present invention, a reduction of flux is possible since, as indicated above, conditions of counter-phase vibration tend to occur outside the area of full torque of the asynchronous motor. The amount by which the flux is reduced is only limited by the maximum current which may be supplied by the power supply and to the motors. Since the torque produced is the product of the flux and the current supplied, for an induction motor working below its nominal torque there remains the possibility of increasing the current by reducing the supply voltage while maintaining constant frequency.

For typical main line rail vehicles operating with a 2800 V intermediate circuit, the motor flux will usually be held constant at its nominal value up to an operating frequency of about 50 Hz. Above this value, if further speed increase is required, the voltage is limited by the limits of the power semiconductors in the intermediate circuit and may not increase further. The result is a reduction in the motor flux. This area of operation, known as the field-weakening range as opposed to the ISC/DSC range, may extend under certain conditions up to 80Hz. Instabilities of the counter-phase vibration type as addressed by the present invention, generally occur at low frequencies around 10 to 15 Hz, typically during start-up or low-speed operation (crawling) and are thus well outside the range of operation where the flux of the group drive is reduced due to field-weakening effects.

From a systems engineering viewpoint, the asynchronous motor forms a feedback coupling of the mechanical drive. By reducing flux, the amplification of this feedback diminishes and the range of stable operation can be significantly increased. Under certain circumstances, instabilities no longer occur at all.

The precise factors which may cause such instabilities to occur can vary considerably from system to system. They may also differ considerably between substantially identical models of the same system e.g. between two locomotives of the same type. This may be due to slight differences in wear or tolerance of individual components within the systems. For this reason, according to one embodiment of the present invention it is desirable that the factors upon which the decision to reduce the flux is based may be adjusted.

According to one embodiment of the invention the system may be monitored to determine the temperature of the motor and motor flux reduced when the temperature of the motor is below a preset value. Preferably the temperature of the stator winding may be used to provide this indication, the temperature being provided by sensors located on each stator winding. It has been found that low motor temperatures can reduce the overall system damping, leading to increased chances of counter phase vibrations developing.

According to a further embodiment of the present invention, the presence of low system damping in general may be monitored and motor flux reduced when the system damping is below a preset value. One indication of low system damping is given by the proximity of the operating point to the maximum of the wheel slip characteristic. The position of the operating point with respect to the wheel slip characteristic may be determined by monitoring the gradient of the wheel slip - power curve. This may be determined by monitoring the angular velocity of the rotor and comparing it with the reference speed for a given input power. Alternatively, if traction control is activated it may be possible to monitor a reduction of torque imposed by the traction control as being indicative of operation at or close to the maximum. It may also be desirable to provide a flag indicative of operation of the traction control wherein motor flux is reduced when the flag is set.

According to a further embodiment of the invention it has been found that counter phase vibrations can often occur under conditions of low stator frequency. Accordingly, the system may be monitored to determine a value indicative of the stator frequency and motor flux reduced when the value indicative of the stator frequency of the motor is within a defined range.

According to a still further embodiment of the invention it has been found that counter phase vibrations can also often occur under conditions of torque below the nominal value. Accordingly, the system may be monitored to determine the motor torque and motor flux reduced when the motor torque is within a defined range.

Advantageously, the system may be monitored for the presence of a plurality of factors indicative of the onset of counter-phase vibration and motor flux reduced only when a number of those factors are detected. Alternatively, and depending upon the circumstance, the motor flux may be reduced only when all of those factors are detected. Various methods may be used to provide such determination. These may include hardware type systems using comparators and e.g. logical AND gates or may involve the use of software such as fuzzy logic type programs to evaluate the various weightings of different factors likely to lead to the onset of counter-phase vibrations.

In an alternative embodiment of the present invention, the mathematical relation embodying the system may be used to calculate the point at which counter-phase vibration may occur. This relation may be provided in the form of a computer model with the system variables of e.g. current, voltage, torque, temperature and frequency provided as inputs.

The above-mentioned examples encompass methods of indirectly detecting the expected onset of counter-phase vibration, effectively preventing such vibrations prior to them occurring. It is also within the scope of the present invention to directly identify these vibrations and thereafter reduce the flux of the plurality of motors. This detection may be achieved in various ways as such well known to the skilled man in the art. Individual motion sensors may be provided for each motor or mechanical drive or the stator currents may be individually monitored for out-of-phase components. Such direct monitoring may be used in addition to or instead of the indirect methods mentioned above.

Embodiments of the present invention will now be described, by way of example only, having reference to the accompanying figures, in which:
Figure 1 is a graphical representation of a typical wheel slip - traction characteristic for a rail vehicle;
Figure 2 is a block diagram of a group drive according to the prior art;
Figure 3 is a block diagram of an embodiment of a group drive according the present invention;
Figure 4 is a block diagram of a flux reduction unit for a group drive according to a further embodiment the present invention;
Figures 5A and 5B are Nichols charts of the open-loop gain and phase-shift for different stator frequencies; and
Figures 6A and 6B are Eigen Values for the motor and drive at the stator frequencies according to Figure 5A and 5B.

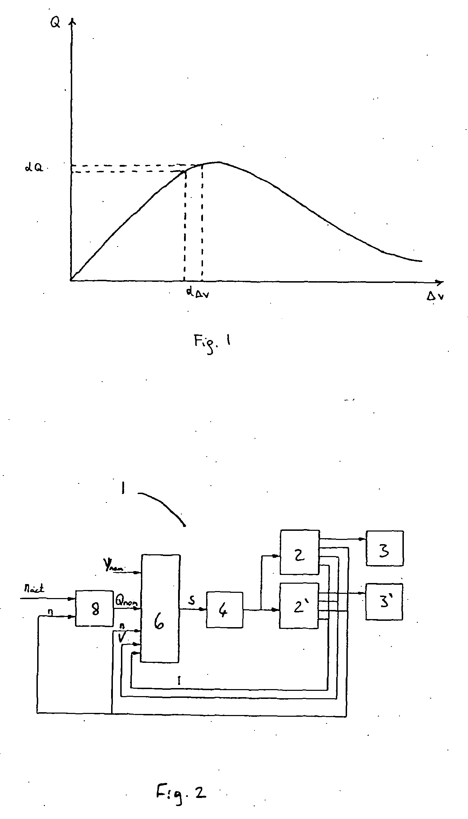

Figure 1 shows a typical wheel slip - traction characteristic for a rail vehicle. The nature of the rail-wheel system is that for a force to be exerted across the rail-wheel interface, a degree of slip must be present. This slip may be defined as the difference in velocity between the two metal surfaces Δv. As the slip Δv increases, the force transmitted increases towards a maximum value and then decreases again. In general, modem rail vehicles operate on the rising part of this characteristic in the area of positive gradient. Under conditions of limited traction, adhesion controllers are provided with algorithms which are designed to seek the point of maximum traction, shown in Figure 1 as point X. This may be achieved by e.g. periodically incrementing the frequency and observing the torque response. Occasionally, rail vehicles are adapted to operate on the negative area of the characteristic towards the area of uncontrolled wheel spin. This may be used in the case of the first wheel set as an attempt to clean the rails and increase adhesion for subsequent wheel sets.

For a wheel set operating in the upper region of the wheel slip - traction characteristic, there is very little damping provided by the rail/wheel interface to prevent vibrations occurring involving elements of the mechanical drive. Since modem trains operate increasingly in this region, such vibrations are a significant problem.

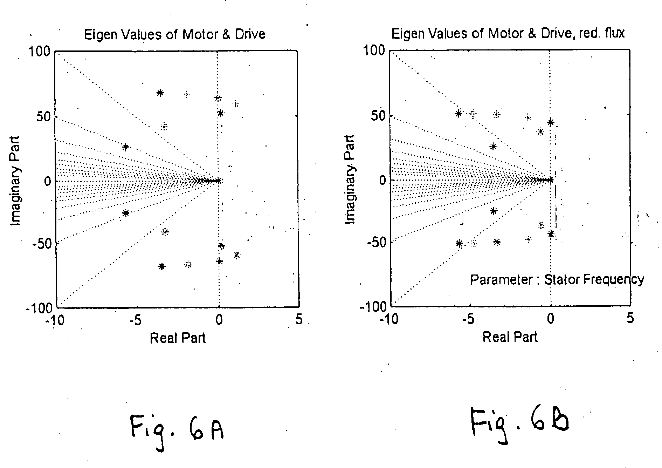

Figure 2 represents a block diagram of a typical group drive 1 for a pair of asynchronous motors 2, 2'. Each motor 2, 2' is coupled to a respective drive 3, 3' which in the present example may include a transmission and a rail vehicle wheel set. The motors 2, 2' may be single phase or multi-phase units. For most rail systems, the motors will be three phase units.

The motors 2, 2' are fed in parallel by a single power inverter 4, which supplies power to the motors 2, 2' according to firing or switching commands S provided by an inverter control unit. Typically the power inverter would be a three phase inverter unit using power semiconductors to convert DC input power from the rail vehicle intermediate circuit into a three phase pulse train to the motors 2, 2'. The group drive 1 further includes a traction control unit 8 which is intended to stabilise the drive in the case of varying friction conditions between the wheels and the rail.

The inverter control unit 6 receives feedback of the system parameters from the motors and drive. These parameters are the shaft rotation speed n (which in the case of a plurality of motors is the average value of the shaft speeds of the individual motors and the phase currents I. The value of the intermediate circuit voltage V supplied to the inverter is also provided as input to the inverter control unit 6. The inverter control unit 6 uses the so-called Direct/Indirect Self Control method (DSC/ISC) to set the switching commands S to the power inverter 4. This is achieved by a computational circuit within the inverter control unit 6 which contains models of the power inverter 4 and the motors 2, 2'. The system parameters n, I and V are used as inputs to the models to calculate an actual stator flux ψ_{act} and an actual torque value Q_{act} for the motors. The values ψ_{act} and Q_{act} are of course average calculated values for the individual motors 2, 2' which are considered by the system to be equal. The values ψ_{act} and Q_{act} are compared with predetermined nominal values ψₙₒₘ and Qₙₒₘ and the difference is used by the inverter control unit 6 to update the switching commands S to the power inverter 4. The comparison of the calculated actual stator flux ψ_{act} and the nominal flux ψₙₒₘ within the inverter control unit and may be made by a device or program referred to as a flux control unit. The purpose of such a device is to maintain the motors at their operating point, usually corresponding to the maximum possible flux. No provision is made for adjusting the level of this nominal flux.

For the purpose of the present invention, the actual workings of the inverter control unit 6 are unimportant and it can be considered as a black box which merely outputs the required switching signals to the power inverter according to the desired performance. In principle any other kind of field-oriented control is possible instead of the so-called self-control methods. Suitable inverter control units are well known and understood by the skilled person.

The traction control unit 8, receives feedback from the motors 2, 2' of the shaft rotation speed n and compares this with a value related to the actual velocity of the vehicle along the track. Various ways are available for achieving this signal, including measurements using a free running wheel, GPS measurement of the train movement and other approximations. From the difference between actual shaft rotation speed n and the true speed n_{act} the relative mechanical slip Δv between the wheel and the rail can be determined. The traction control unit 8 uses this value of slip to determine whether a torque reduction is required. This is achieved by using e.g. a search algorithm wherein the stator frequency will be incrementally increased and reduced while monitoring the resultant torque reaction to determine the point of maximum traction. The influence of the traction control unit 8 on the inverter control unit is in terms of the nominal torque requested Qₙₒₘ. No variation in the nominal flux ψₙₒₘ is provided for.

Under normal conditions of operation, the value of the flux will always be kept as close as possible to the nominal value of the flux ψₙₒₘ. At this point, for a given motor torque, the current will be minimised, since the torque is the product of current and flux. By minimising the current, the losses within the motors are reduced and motor temperature is also kept to a minimum.

It has now been observed that the group drive 1 may, under certain conditions, display low-frequency vibrations wherein the rotor of motor 2 together with drive 3 may move in anti-phase with respect to the other rotor of motor 2' and drive 3'. The two mechanical drives thus form two inertial bodies, linked together from the rotor to the stator and through the electrical circuit linking the motors 2, 2'. In cases where damping of the system is light, these vibrations can propagate and become a nuisance. Such situations have been found to occur especially when the wheels are close to the point of free spin with respect to the rails, and where damping in the motors themselves is minimal e.g. at low temperatures. It is believed that many other factors may also play a part in reducing the overall system damping wherein such vibrations may propagate.

Since the inverter control unit 6 is only provided with the mean values of the phase currents I and shaft rotation speed n, this particular type of counter-phase vibration remains hidden to the control system provided by the inverter control unit 6 and the traction control unit 8.

Figure 3 shows a block diagram of a group drive 101 according to one aspect of the present invention in which like reference numerals are used to denote similar items to those of Figure 2. The same numerals will be used throughout the present text. According to Figure 3, a flux reduction unit 110 is additionally provided.

Flux reduction unit 110 receives a number of inputs. These include a signal T representative of motor temperature. This may be the temperature as measured in the stator windings or may be derived indirectly by other means. Flux reduction unit 110 further receives inputs of shaft rotation speed n, a traction control flag TCF from the traction control unit 8 as a flag that the traction control unit 8 is operative to reduce traction and a signal for the actual torque Q_{act} from the inverter control unit 6, as calculated by the motor model provided therein.

The flux reduction unit 110 includes a processor which assesses the input values T, n, TCF and Q_{act} and determines for each value whether they represent a factors indicative of the onset of counter-phase vibration. As an example, T may be considered a factor if it is below 50° C, n may be considered a factor if it represents a stator frequency below 15Hz, TCF may be a factor if it is active, while Q_{act} may be a factor if it is less than 70% of Qₙₒₘ. These values given are exemplary only and are not intended to be limiting upon the ranges of values under which flux should be reduced. Such values may be calculated by experiment or otherwise and may need to be determined specifically for each individual drive arrangement.

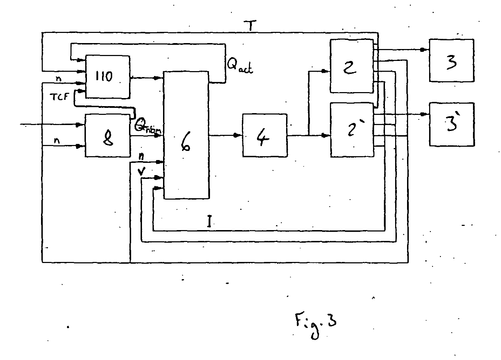

Figure 4 shows an alternative arrangement for a flux reduction unit 210 according to an alternative embodiment of the preset invention. Flux reduction unit 210 includes a number of reference units 215-219 and a number of comparators 221 - 225. As in the previous embodiment of Figure 3, flux reduction unit receives a number of inputs from other elements of the group drive 1. These inputs are: T, a value representative of the temperature of the motors, which can be provided as an average temperatue of the stator windings; stator frequency (as an alternative to rotor speed n in Figure 3) may be derived from the signals S supplied by the inverter control unit 6; dQ/dΔv which gives the gradient of the wheel slip - traction characteristic and may be calculated from data provided by the inverter control unit 6 and the traction control unit 8; torque Q; and the traction control flag TCF mentioned above.

In the flux reduction unit 210, the signal T and a value T_{ref} stored in reference unit 215 are compared in comparator 221. If T is less than T_{ref} then output 231 goes high. Similarily, signal f and a value fₘₐₓ stored in reference unit 216 are compared in comparator 222. If f is less than fₘₐₓ then output 232 goes high. Signal f is also compared in comparator 223 with a value fₘᵢₙ stored reference unit 217. If f is more than fₘᵢₙ then output 233 goes high. Signals dQ/dΔv and Q are similarly compared with reference values stored in reference units 218 and 219 and comparators 224 and 225 issue high signal 234 and 235 respectively when the signals are below the reference values.

The outputs 231- 235 and a signal 236 set by the TCF are provided as inputs to a logical AND gate 240. If all the inputs to the AND gate 240 are high, a flux reduction signal 242 is output to a flux reduction controller 250. Flux reduction controller applies a step reduction in the value of ψₙₒₘ applied as input to inverter control unit 6. This step reduction may be preset at a value of e.g. 80% of ψₙₒₘ and may also be related to the value of Q_{ref} stored in comparator 219. By this means, if torque Q is sufficiently below the set point, a reduction in flux of e.g. 20% will not cause the phase current to exceed its maximum value.

According to the embodiment of Figure 4 a hysteresis device 252 is located between AND gate 240 and flux reduction controller 250. Hysteresis device 252 is intended to prevent flux reduction controller switching in and out under operating conditions which are close to the limits given by reference units 215 to 219. This is particularly important in the case of a large number of inputs to AND gate 240, since a change in any one of those inputs could cause flux reduction signal 242 to switch. The hysteresis device may be temporal, requiring a certain time between switchings, or may be signal controlled, e.g. requiring more than one of the outputs 231-235 and TCF signal 236 to go low before the input to flux reduction controller 250 goes low.

It is evident to the skilled man that various alternative combinations of logical units could be provided to achieve the desired effect. The motor temperature signal T could be provided as an AND combination of the individual motors 2, 2' wherein the signal would only be high if both motors were below the reference temperature. Similarly, the signals TCF and dQ/dΔv could be combined in an OR gate. It could also be desirable to configure AND gate 240 to go high when a certain number of the 6 inputs are high.Various other inputs could also be included depending upon their influence on the onset of vibrations. In particular, the signal for torque Q may be substituted by e.g using other measurements representative of traction.

As mentioned above, the flux reduction controller 250 may provide a simple step reduction in flux. In an alternative embodiment, the flux reduction could be calculated according to the prevailing operating conditions wherein the flux reduction controller 250 is provided with further inputs of system parameters.

Reduction of the flux serves to decrease the feedback gain of the overall transfer function and ensures greater stability even at low frequency. While not wishing to be bound by theory, it is believed that by reducing flux and increasing current in the motors 2, 2', the stator frequency will increase while the rotor frequency remains substantially constant. This means that the electrical slip within each of the motors 2, 2' will be greater, providing a less rigid coupling between the two inertial masses provided by the mechanical drives.

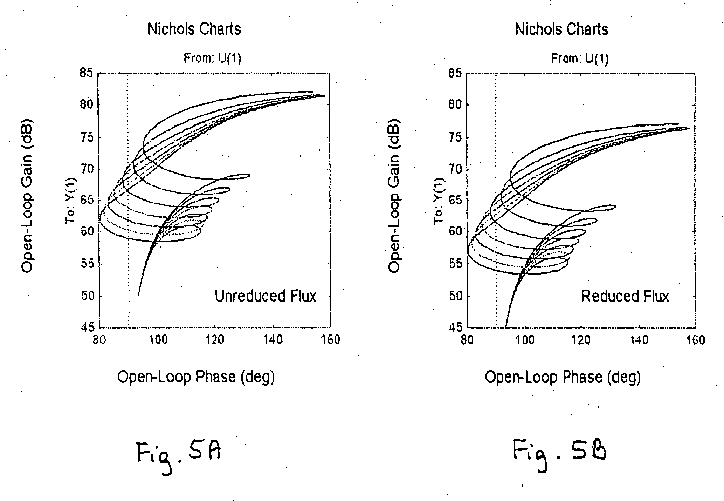

This can be well illustrated, as far as dynamic systems behaviour linearised at the operating point of the asynchronous engine is concerned, with the help of a so-called Nichols Chart according to Figure 5. Figure 5A illustrates the behaviour for different operational frequencies from 5 to 20Hz. Figure 5B illustrates the same operational frequencies but under conditions of reduced flux.

It is known from control theory that the critical phase displacement remains below 90° in both cases. However, if flux is reduced as shown in Figure 5B, the associated amplification is significantly lower, which promises an improvement of the stability of the system as a whole.

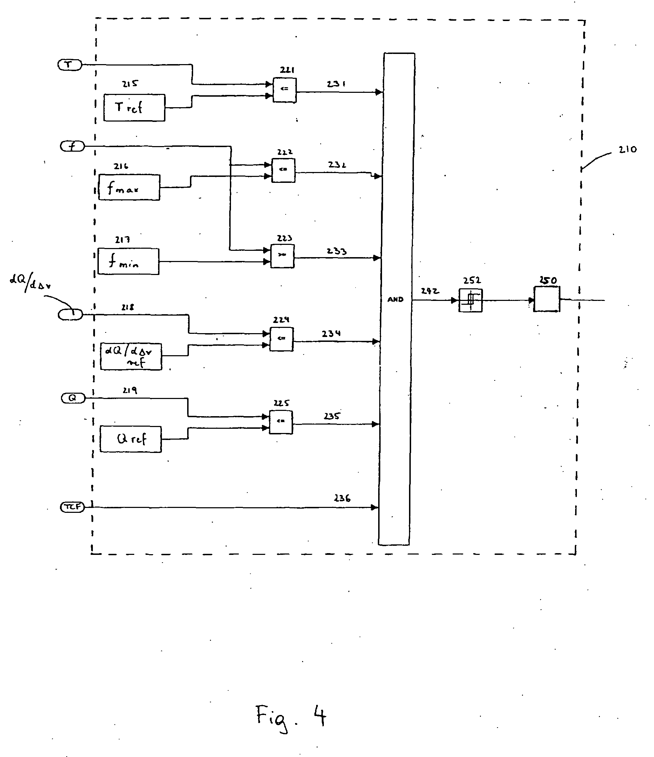

For the system as a whole, the relevant system poles resulting from different basic stator frequencies are shown in Figure 6. Where the flux has not been reduced in Figure 6A, instability represented by poles having a positive real part occurs in the chosen marginal circumstances within a basic stator frequency range of between 10 and 15 Hz. In the case of reduced flux according to Figure 6B, vibrations of the type mentioned are only to be expected for basic stator frequencies of around 10 Hz.

While the above examples illustrate preferred examples of the present invention it is noted that various other arrangements may also be considered which fall within the scope of the present invention.

## Claims

1. A method of reducing counter-phase vibration of a plurality of asynchronous motors (2,2') driven within a system, the motors (2,2') being supplied in parallel by a common power supply, the method comprising:
monitoring the system for the presence of one or more factors indicative of the onset of counter-phase vibration; and
on detection of the presence of such factors, reducing the motor flux of the plurality of motors.

2. The method according to claim 1, wherein the system is monitored to determine the temperature of the motors (2,2') and motor flux is reduced when the temperature of the motors (2,2') is below a preset value.

3. The method according to claim 1 or claim 2, wherein the system is monitored to determine the temperature of the stator winding and motor flux is reduced when the temperature of the stator winding is below a preset value.

4. The method according to any of the preceding claims, wherein the system is monitored to determine a value indicative of the stator frequency and motor flux is reduced when the value indicative of the stator frequency of the motor is within a defined range.

5. The method according to any of the preceding claims, wherein the system is monitored to determine the presence of low system damping and motor flux is reduced when the system damping is below a preset value.

6. The method according to any of the preceding claims, wherein the system is monitored to determine proximity of the operating point to the maximum of the wheel slip characteristic and motor flux is reduced when the wheel slip is within a defined range.

7. The method according to any of the preceding claims, wherein the system is provided with a traction control device which reduces the motor torque on the occurrence of reduced traction and motor flux is reduced when the traction control device operates to reduce the torque.

8. The method according to any of the preceding claims, wherein the system is monitored to determine the motor torque and motor flux is reduced when the motor torque is within a defined range.

9. The method according to any of the preceding claims, wherein the system is monitored for the presence of a plurality of factors indicative of the onset of counter-phase vibration and motor flux is reduced only when a number of those factors are detected.

10. The method according to any of the preceding claims, wherein the system is monitored for the presence of a plurality of factors indicative of the onset of counter-phase vibration and motor flux is reduced only when all of those factors are detected.

11. The method according to claim 10 or 9, wherein a fuzzy logic controller is used to determine the reduction of motor flux on the basis of the monitored factors and their relative significance.

12. The method according to claim 10 or 11 wherein values for the one or more factors are stored in a multidimensional look up table indicating for a given combination of factors whether motor flux should be reduced or not.

13. The method according to claim 1 wherein the individual motors are separately monitored and compared to indicate directly the presence of counter-phase vibrations

14. The method according to any of the preceding claims wherein the common power supply is a power converter (4).

15. The method according to claim 11 wherein the power converter is controlled by a converter control unit (6).

16. The method according to claim 15 wherein the system is monitored by a flux reduction unit (110,210,250) which provides a signal to the converter control unit (6) to reduce the motor flux on detection of the one or more factors indicative of the onset of counter-phase vibration.

17. A rail vehicle drive comprising:
a plurality of asynchronous motors (2,2') each motor being connected to a respective mechanical drive (3,3') for propulsion of the rail vehicle;
a power converter (4) supplying electrical power to the motors (2,2'), the motors (2,2') being supplied in parallel;
a converter control unit (6) providing control signals to the power converter (4);
**characterized by** a flux reduction unit (110,210,250) monitoring the system for the presence of one or more factors indicative of the onset of counter-phase vibration between the motors (2,2') and on detection of the presence of such factors, providing a signal to the converter control unit (6) to reduce the motor flux of the plurality of motors (2,2').

18. A rail vehicle drive according to claim 17 further comprising motor temperature sensors, the motor temperature sensors providing a system signal to the flux reduction unit (110,210,250) indicative of the temperature of the plurality of motors (2,2').

19. A rail vehicle drive according to claim 17 or claim 18 further comprising a stator frequency indicator, the stator frequency indicator providing a system signal to the flux reduction unit (110,210,250) indicative of the stator frequency of the plurality of motors (2,2').

20. A rail vehicle drive according to any of claims 17 to 19 further comprising a traction control unit (8), the traction control unit (8) providing a system signal to the flux reduction unit (110,210,250) indicative of operation of the traction control unit (8).

21. A rail vehicle drive according to any of claims 17 to 20 further comprising motor torque indicator, the motor torque indicator providing a system signal to the flux reduction unit (110,210,250) indicative of the motor torque of the plurality of motors (2,2').

22. A rail vehicle drive according to any of claims 17 to 21 wherein the flux reduction unit (110,210,250) comprises a processor which analyses the system signals to determine the presence of the one or more factors.

23. A rail vehicle drive according to claim 22 wherein the processor uses fuzzy logic to analyse the system signals.

24. A rail vehicle drive according to claim 22 or 23 wherein the flux reduction unit (110,210,250) comprises a multi-dimensional look up table and the processor compares the system signals to values provided in the multi-dimensional look up table to determine the presence of the one or more factors.

25. A rail vehicle drive according to claim 22 or 23 wherein the flux reduction unit (110,210,250) contains the relevant differential equations describing the system behaviour and the processor uses the system signals as parameters in the differential equations to determine the presence of the one or more factors.

26. A rail vehicle drive according to any of claims 17 to 25 wherein monitors are provided on the individual asynchronous motors (2,2') and drives (3,3') to indicate directly to the flux reduction unit (110,210,250) the presence of counter-phase vibrations.

## Patentansprüche

1. Eine Methode zur Verringerung der Gegentaktschwingung mehrerer in einem System angetriebener Asynchronmotoren (2, 2'), die parallel von einer gemeinsamen Stromversorgung gespeist werden, wobei die Methode umfaßt:
Überwachung des Systems auf Vorliegen eines oder mehrerer Faktoren, die auf das Eintreten von Gegentaktschwingung hinweisen; und
bei Entdeckung des Vorliegens solcher Faktoren die Verringerung des Motorstroms der Motoren.

2. Die Methode nach Anspruch 1, bei der das System überwacht wird, um die Temperatur der Motoren (2, 2') zu bestimmen, und der Motorstrom reduziert wird, wenn die Temperatur der Motoren (2, 2') unter einem voreingestellten Wert N Wert liegt.

3. Die Methode nach Anspruch 1 oder 2, bei der das System überwacht wird, um die Temperatur der Statorwicklung zu bestimmen, und der Motorstrom reduziert wird, wenn die Temperatur der Statorwicklung unter einem voreingestellten Wert liegt.

4. Die Methode nach einem beliebigen der vorstehenden Ansprüche, bei der das System überwacht wird, um einen Angabewert zur Statorfrequenz zu bestimmen, und der Motorstrom reduziert wird, wenn der Angabewert der Statorfrequenz des Motors innerhalb eines definierten Bereichs liegt.

5. Die Methode nach einem beliebigen der vorstehenden Ansprüche, bei der das System überwacht wird, um das Vorhandensein von geringer Systemdämpfung zu bestimmen, und der Motorstrom reduziert wird, wenn die Systemdämpfung unter einem voreingestellten Wert liegt.

6. Die Methode nach einem beliebigen der vorstehenden Ansprüche, bei der das System überwacht wird, um die Nähe des Betriebspunkts zum Maximum des Radschlupfmerkmals zu bestimmen, und der Motorstrom reduziert wird, wenn der Radschlupf innerhalb eines definierten Bereichs liegt.

7. Die Methode nach einem beliebigen der vorstehenden Ansprüche, bei der das System mit einer Zugkontrollvorrichtung versehen ist, die das Motordrehmoment bei eintretendem verringertem Zug reduziert, und der Motorstrom reduziert wird, wenn die Zugkontrollvorrichtung funktioniert, um das Drehmoment zu reduzieren.

8. Die Methode nach einem beliebigen der vorstehenden Ansprüche, bei der das System überwacht wird, um das Motordrehmoment zu bestimmen, und der Motorstrom reduziert wird, wenn das Motordrehmoment innerhalb eines definierten Bereichs liegt.

9. Die Methode nach einem beliebigen der vorstehenden Ansprüche, bei der das System nach dem Vorliegen von mehreren Faktoren überwacht wird, die auf das Eintreten von Gegentaktschwingung hinweisen, und der Motorstrom nur dann reduziert wird, wenn eine Reihe dieser Faktoren entdeckt werden.

10. Die Methode nach einem beliebigen der vorstehenden Ansprüche, bei der das System nach dem Vorliegen von mehreren Faktoren überwacht wird, die auf das Eintreten von Gegentaktschwingung hinweisen, und der Motorstrom nur dann reduziert wird, wenn alle diese Faktoren entdeckt werden.

11. Die Methode nach Anspruch 10 oder 9, bei der ein Fuzzy-Logikregler eingesetzt wird, um die Reduzierung des Motorstroms auf der Grundlage der überwachten Faktoren und ihrer relativen Bedeutung zu bestimmen.

12. Die Methode nach Anspruch 10 oder 11, bei der Werte für den oder die Faktor(en) in einer multidimensionalen Tabelle gespeichert werden, die für eine gegebene Kombination von Faktoren angibt, ob der Motorstrom reduziert werden sollte oder nicht.

13. Die Methode nach Anspruch 1, bei der die einzelnen Motoren getrennt überwacht und verglichen werden, um das Vorliegen von Gegentaktschwingung direkt anzugeben.

14. Die Methode nach einem beliebigen der vorstehenden Ansprüche, bei der die gemeinsame Stromversorgung ein Stromrichter (4) ist.

15. Die Methode nach Anspruch 11, bei der der Stromrichter von einer Stromrichter-Steuereinheit (6) geregelt wird.

16. Die Methode nach Anspruch 15, bei der das System durch einem Stromreduzierungsgerät (110, 210, 250) überwacht wird, die ein Signal an die Stromrichter-Steuereinheit (6) schickt, um den Motorstrom bei Entdeckung von einem oder mehreren Faktoren zu reduzieren, die auf das Eintreten von Gegentaktschwingung hinweisen.

17. Ein Schienenfahrzeugantrieb umfassend:
Mehrere Asynchronmotoren (2, 2'), wobei jeder Motor an einen jeweiligen mechanischen Antrieb (3, 3') für den Vortrieb des Schienenfahrzeugs angeschlossen ist;
Ein Stromrichter (4), der Stromleistung an die Motoren (2, 2') liefert, wobei die Motoren (2, 2') parallel gespeist werden;
Eine Stromrichter-Steuereinheit (6), die Kontrollsignale an den Stromrichter (4) abgibt, **gekennzeichnet durch** ein Stromreduzierungsgerät (110, 210, 250), das das System auf das Vorliegen eines oder mehrerer Faktoren überwacht, die auf das Eintreten von Gegentaktschwingung zwischen den Motoren (2, 2') hinweist und bei Entdeckung des Vorliegens solcher Faktoren ein Signal an die Stromrichter-Steuereinheit (6) abgibt, den Motorstrom der Motoren (2, 2') zu reduzieren.

18. Ein Schienenfahrzeugantrieb nach Anspruch 17, der ferner Motortemperatursensoren umfaßt, wobei die Motortemperatursensoren ein Systemsignal an das Stromreduzierungsgerät (110, 210, 250) abgeben, das auf die Temperatur der Motoren (2, 2') hinweist.

19. Ein Schienenfahrzeugantrieb nach Anspruch 17 oder 18, der ferner einen Statorfrequenzanzeiger umfaßt, wobei der Statorfrequenzanzeiger ein Systemsignal an das Stromreduzierungsgerät (110, 210, 250) abgibt, das auf die Statorfrequenz der Motoren (2, 2') hinweist.

20. Ein Schienenfahrzeugantrieb nach einem beliebigen der vorstehenden Ansprüche 17 bis 19, der ferner eine Zugkontrollvorrichtung (8) umfaßt, wobei die Zugkontrollvorrichtung (8) ein Systemsignal an das Stromreduzierungsgerät (110, 210, 250) abgibt, das auf den Betrieb der Zugkontrollvorrichtung (8) hinweist.

21. Ein Schienenfahrzeugantrieb nach einem beliebigen der vorstehenden Ansprüche 17 bis 20, der ferner einen Motor-Drehmomentanzeiger umfaßt, wobei der Motor-Drehmomentanzeiger ein Systemsignal an das Stromreduzierungsgerät (110, 210, 250) abgibt, das auf das Motordrehmoment der Motoren (2, 2') hinweist.

22. Ein Schienenfahrzeugantrieb nach einem beliebigen der vorstehenden Ansprüche 17 bis 21, bei dem das Stromreduzierungsgerät (110, 210, 250) einen Prozessor umfaßt, der die Systemsignale auswertet, um das Vorliegen eines oder mehrerer Faktoren zu bestimmen.

23. Ein Schienenfahrzeugantrieb nach Anspruch 22, bei dem der Prozessor für die Auswertung der Systemsignale Fuzzy-Logik einsetzt.

24. Ein Schienenfahrzeugantrieb nach Anspruch 22 oder 23, bei dem das Stromreduzierungsgerät (110, 210, 250) eine multidimensionale Tabelle umfaßt, und der Prozessor die Systemsignale mit Werten vergleicht, die in der multidimensionalen Tabelle angegeben sind, um das Vorliegen eines oder mehrerer Faktoren zu bestimmen.

25. Ein Schienenfahrzeugantrieb nach Anspruch 22 oder 23, bei dem das Stromreduzierungsgerät (110, 210, 250) die relevanten Differentialgleichungen enthält, die das Systemverhalten beschreiben, und der Prozessor die Systemsignale als Parameter in den Differentialgleichungen nutzt, um das Vorliegen eines oder mehrerer Faktoren zu bestimmen.

26. Ein Schienenfahrzeugantrieb nach einem beliebigen der vorstehenden Ansprüche 17 bis 25, bei dem Monitore auf den einzelnen Asynchronmotoren (2, 2') und Antrieben (3, 3') vorhanden sind, um dem Stromreduzierungsgerät (110, 210, 250) direkt das Vorliegen von Gegentaktschwingungen anzugeben.

## Revendications

1. Procédé de réduction d'une vibration en opposition de phase d'une pluralité de moteurs asynchrones (2, 2') entraînés à l'intérieur d'un système, les moteurs (2, 2') étant alimentés parallèlement par une alimentation en énergie commune, le procédé comprenant :
la surveillance du système pour vérifier la présence d'au moins un facteur indiquant le début de la vibration en opposition de phase ; et
après avoir détecté la présence de tels facteurs, la réduction du flux moteur de la pluralité de moteurs.

2. Procédé selon la revendication 1, dans lequel le système est surveillé afin de déterminer la température des moteurs (2, 2'), et le flux moteur est réduit lorsque la température des moteurs (2, 2') est inférieure à une valeur prédéfinie.

3. Procédé selon la revendication 1 ou 2, dans lequel le système est surveillé afin de déterminer la température de l'enroulement du stator, et le flux moteur est réduit lorsque la température de l'enroulement du stator est inférieure à une valeur prédéfinie.

4. Procédé selon l'une quelconque des revendications précédentes, dans lequel le système est surveillé afin de déterminer une valeur indiquant la fréquence du stator, et le flux moteur est réduit lorsque la valeur indiquant la fréquence du stator du moteur respecte les limites d'une plage définie.

5. Procédé selon l'une quelconque des revendications précédentes, dans lequel le système est surveillé afin de déterminer la présence d'un faible amortissement du système, et le flux moteur est réduit lorsque l'amortissement du système est inférieur à une valeur prédéfinie.

6. Procédé selon l'une quelconque des revendications précédentes, dans lequel le système est surveillé afin de déterminer la proximité du point de fonctionnement avec le maximum de la caractéristique de patinage, et le flux moteur est réduit lorsque le patinage respecte les limites d'une plage définie.

7. Procédé selon l'une quelconque des revendications précédentes, dans lequel le système est doté d'un dispositif de traction asservie qui réduit le couple moteur lors de la réduction de la traction, et le flux moteur est réduit lorsque le dispositif de traction asservie fonctionne pour réduire le couple.

8. Procédé selon l'une quelconque des revendications précédentes, dans lequel le système est surveillé afin de déterminer le couple moteur, et le flux moteur est réduit lorsque le couple moteur respecte les limites d'une plage définie.

9. Procédé selon l'une quelconque des revendications précédentes, dans lequel le système est surveillé afin de vérifier la présence d'une pluralité de facteurs indiquant le début de la vibration en opposition de phase, et le flux moteur est réduit uniquement lorsqu'un certain nombre de ces facteurs sont détectés.

10. Procédé selon l'une quelconque des revendications précédentes, dans lequel le système est surveillé afin de vérifier la présence d'une pluralité de facteurs indiquant le début de la vibration en opposition de phase, et le flux moteur est réduit uniquement lorsque l'ensemble de ces facteurs sont détectés.

11. Procédé selon la revendication 9 ou 10, dans lequel un dispositif de commande à logique floue est utilisé pour déterminer la réduction du flux moteur sur la base des facteurs surveillés et de leur importance relative.

12. Procédé selon la revendication 10 ou 11, dans lequel les valeurs pour le au moins un facteur sont stockées dans une table de conversion multidimensionnelle indiquant, pour une combinaison de facteurs donnée, si le flux moteur doit être ou non réduit.

13. Procédé selon la revendication 1, dans lequel les moteurs individuels sont surveillés séparément, puis comparés pour indiquer directement la présence de vibrations en opposition de phase.

14. Procédé selon l'une quelconque des revendications précédentes, dans lequel l'alimentation en énergie commune est un convertisseur de puissance (4).

15. Procédé selon la revendication 11, dans lequel le convertisseur de puissance est commandé grâce à une unité de commande de convertisseur (6).

16. Procédé selon la revendication 15, dans lequel le système est surveillé grâce à une unité de réduction du flux (110, 210, 250) qui fournit un signal à l'unité de commande du convertisseur (6) pour réduire le flux moteur lors de la détection d'au moins un facteur indiquant le début de la vibration en opposition de phase.

17. Dispositif d'entraînement d'un véhicule ferroviaire comprenant :
une pluralité de moteurs asynchrones (2, 2'), chaque moteur étant connecté à un dispositif d'entraînement mécanique (3, 3') respectif pour la propulsion du véhicule ferroviaire ;
un convertisseur de puissance (4) alimentant en énergie électrique les moteurs (2, 2'), les moteurs (2, 2') étant alimentés en parallèle ;
une unité de commande de convertisseur (6) fournissant des signaux de commande au convertisseur de puissance (4) ;
**caractérisé par** une unité de réduction du flux (110, 210, 250) surveillant le système pour vérifier la présence d'au moins un facteur indiquant le début de la vibration en opposition de phase entre les moteurs (2, 2') et lors de la détection de la présence de tels facteurs, fournissant un signal à l'unité de commande du convertisseur (6) pour réduire le flux moteur de la pluralité de moteurs (2, 2').

18. Dispositif d'entraînement d'un véhicule ferroviaire selon la revendication 17, comprenant en outre des capteurs de température du moteur, les capteurs de température du moteur fournissant un signal de système à l'unité de réduction du flux (110, 210, 250) indiquant la température de la pluralité de moteurs (2, 2').

19. Dispositif d'entraînement d'un véhicule ferroviaire selon la revendication 17 ou 18, comprenant en outre un indicateur de fréquence du stator, l'indicateur de fréquence du stator fournissant un signal de système à l'unité de réduction du flux (110, 210, 250), indiquant la fréquence du stator de la pluralité de moteurs (2, 2').

20. Dispositif d'entraînement d'un véhicule ferroviaire selon l'une quelconque des revendications 17 à 19, comprenant en outre une unité de traction asservie (8), l'unité de traction asservie (8) fournissant un signal de système à l'unité de réduction du flux (110, 210, 250) indiquant le fonctionnement de l'unité de traction asservie (8).

21. Dispositif d'entraînement d'un véhicule ferroviaire selon l'une quelconque des revendications 17 à 20, comprenant en outre un indicateur de couple moteur, l'indicateur de couple moteur fournissant un signal de système à l'unité de réduction du flux (110, 210, 250) indiquant le couple moteur de la pluralité de moteurs (2, 2').

22. Dispositif d'entraînement d'un véhicule ferroviaire selon l'une quelconque des revendications 17 à 21, dans lequel l'unité de réduction du flux (110, 210, 250) comprend un processeur qui analyse les signaux du système pour déterminer la présence d'au moins un facteur.

23. Dispositif d'entraînement d'un véhicule ferroviaire selon la revendication 22, dans lequel le processeur utilise une logique floue pour analyser les signaux du système.

24. Dispositif d'entraînement d'un véhicule ferroviaire selon la revendication 22 ou 23, dans lequel l'unité de réduction du flux (110, 210, 250) comprend une table de conversion multidimensionnelle et le processeur compare les signaux du système aux valeurs fournies dans la table de conversion multidimensionnelle pour déterminer la présence d'au moins un facteur.

25. Dispositif d'entraînement d'un véhicule ferroviaire selon la revendication 22 ou 23, dans lequel l'unité de réduction du flux (110, 210, 250) contient les équations différentielles appropriées décrivant le comportement du système et le processeur utilise les signaux du système comme paramètres dans les équations différentielles pour déterminer la présence d'au moins un facteur.

26. Dispositif d'entraînement d'un véhicule ferroviaire selon l'une quelconque des revendications 17 à 25, dans lequel les moniteurs sont fournis sur les moteurs asynchrones individuels (2, 2') et les dispositifs d'entraînement (3, 3') pour indiquer directement à l'unité de réduction du flux (110, 210, 250) la présence des vibrations en opposition de phase.
